# EUROPÄISCHE PATENTSCHRIFT

(11) **EP 3 484 604 B1**
(45) Veröffentlichungstag und Bekanntmachung des Hinweises auf die Patenterteilung: **16.11.2022**
(21) Anmeldenummer: 17749355.8
(22) Anmeldetag: 05.07.2017
(51) Int. Cl.: C02F 3/20, B01F 23/231

(54) **BEGASUNGSEINRICHTUNG**
GASSING DEVICE
DISPOSITIF D'APPORT DE GAZ

(30) Priorität: 18.07.2016 DE 102016113204
(43) Veröffentlichungstag der Anmeldung: 22.05.2019
(73) Patentinhaber: Ott, Alexander, 30169 Hannover (DE)
(72) Erfinder: Ott, Alexander, 30169 Hannover (DE)
(74) Vertreter: Patentanwälte Thömen & Körner
(86) Internationale Anmeldenummer: PCT/DE2017/100564
(87) Internationale Veröffentlichungsnummer: WO 2018/014909

(56) Entgegenhaltungen:
- EP-A1- 2 757 075
- DE-A1- 3 441 731
- DE-A1-102014 226 134
- FR-A- 1 402 244
- US-A1- 2012 193 818

## Beschreibung

Die Erfindung betrifft eine Begasungseinrichtung zum intermittierenden Einbringen von sauerstoffhaltigem Gas oder Luft in eine Flüssigkeit oder das Abwasser einer Kläranlage nach dem Oberbegriff des Anspruchs 1.

Der biologische Reinigungsprozess von Abwasser benötigt Sauerstoff damit im Abwasser befindliche Mikroorganismen Schadstoffe abbauen können. In der sogenannten feinblasigen Belüftung des Abwassers wird Luft über Belüfter in das Abwasser eingetragen. Die Belüfter erfüllen hierbei den Zweck, den Luftvolumenstrom, der ins Abwasser eingetragen wird, so aufzuteilen, dass aus der Luft möglichst viel Sauerstoff in das Abwasser eingetragen werden kann.

Es gibt verschiedene Typen eines Reinigungsprozesses in der biologischen Abwasserreinigung. Eine Form ist das sogenannte kontinuierliche Belebungsverfahren. Hierbei wird ununterbrochen Luft in das Abwasser eingeleitet. Eine andere Form ist das sogenannte intermittierende Belebungsverfahren. Hierbei wird in einer gewissen Frequenz und Häufigkeit Luft eingetragen und dann wieder keine Luft eingetragen. In den Phasen von intermittierenden Belebungsverfahren, in denen keine Luft in das Abwasser eingetragen wird, wirkt die Wassersäule des Abwassers auf die Belüfter ein.

Es gibt unter anderem Belüfter, die mit einer Membran versehen sind und starre Belüfter. Belüfter mit einer Membran bestehen aus mehreren Komponenten. In der Regel einem Trägerkörper, der von einer Membran umschlossen ist. Starre Belüfter bestehen aus einem festen Material in das Löcher eingebracht sind.

Belüfter mit einer Membran sind entweder so gestaltet, dass sich die Membran verschließt sobald keine Luft durch sie hindurch in das Abwasser eingetragen wird, oder im Fall dass eine Membran nicht dicht verschließt, sind Rückschlagventile im Trägerkörper verbaut. Beide Maßnahmen sollen verhindern, das Abwasser unterhalb der Membran eindringen und zu Verstopfungen führen kann. Auch bei starren Belüftern können Rückschlagventile im Trägerkörper verbaut sein. Diese können jedoch nicht vollständig verhindern, dass Abwasser in die Löcher des festen Materials eindringt und zu Verstopfungen führen kann, die die Leistung der Belüfter beeinträchtigen können.

Für den Betrieb beider Arten von Belüftern gilt, dass der benötigte Sauerstoff möglichst effizient in das Abwasser eingetragen werden sollte. Die Effizienz hängt hierbei davon ab, wie viel Energie benötigt wird, um die Luft durch die Belüfter in das Abwasser einzutragen, und von dem Sauerstoffübergang. Die benötigte Energie wird bestimmt von dem Druckverlust der Belüfter. Der Druckverlust beschreibt die benötigte Energie, die benötigt wird um den Luftvolumenstrom in feine Blasen zu zerteilen.

Der Druckverlust von Membranbelüftern hängt ab von dem Öffnungsdruck der Membranen. Dieser Öffnungsdruck wird beeinflusst von der Schlitzgröße und dem Widerstand, den das Membranmaterial gegen ein Öffnen der Membran aufweist. Je kleiner der Schlitz, desto höher der Druckverlust. Je steifer/unflexibler das Material, desto höher der Druckverlust. Bei starren Belüftern wird der Druckverlust bestimmt über die Größe der Löcher in den Belüftern. Da ein Öffnen von Membranen hier nicht stattfindet, bestimmt hier einzig die Art des Lochs eine Rolle für den Druckverlust.

Der Sauerstoffübergang wird bestimmt von der Blasengröße und der Blasenaufstiegsgeschwindigkeit. Je feiner der Luftvolumenstrom in Blasen aufgeteilt wird, desto größer wird die Grenzfläche der Luft, so dass bei gleicher Luftmenge mehr Sauerstoff von den Mikroorganismen aus der Luft gezehrt werden kann. Je langsamer die Luftblasen im Abwasser aufsteigen, desto größer ist die Verweildauer im Abwasser, so dass die Mikroorganismen mehr Zeit haben, Sauerstoff aus der Luft zu zehren.

Die Größe der Luftblasen wird zunächst bestimmt durch die Schlitzgröße in den Membranen bzw. durch die Größe der Löcher in den starren Belüftern. Haben sich die Luftblasen dann von den Belüftern gelöst, so können sich die einzelnen Luftblasen im Abwasser durch Kollisionen zu einer größeren Luftblase verbinden. Dies verschlechtert den Sauerstoffübergang in das Abwasser. Kollisionen dieser Art werden auch beeinflusst durch die Austrittsgeschwindigkeit der Blasen aus dem Belüfter. Schnell herausschießende Blasen tendieren eher dazu zu kollidieren als sich langsam und weich ablösende Blasen. Die Austrittsgeschwindigkeit der Luftblasen bestimmt zudem zum größten Teil auch ihre Aufstiegsgeschwindigkeit. Je schneller eine Luftblase aus dem Belüfter austritt, desto schneller steigt sie nach oben auf.

Für die Herstellung von Belüfter gilt es mit Blick auf die Leistung und Energieeffizienz, die Belüfter so zu gestalten, dass bei möglichst geringem Druckverlust, möglichst feine Blasen, möglichst langsam und kollisionsfrei in das Abwasser eingetragen werden. Zwischen Druckverlust, Blasengröße und Aufstiegsgeschwindigkeit gibt es den Zusammenhang, dass ein feiner Schlitz einen höheren Druckverlust erzeugt und dieser höhere Druckverlust bewirkt, dass die Luftblase mit einer größeren Energie durch den Belüfter in das Abwasser eingetragen wird.

Ein hoher Druckverlust ist hiernach nicht nur energetisch von Nachteil, weil ein Gebläse mehr Energie aufwenden muss um die Luft durch die Belüfter in das Abwasser zu befördern, sondern ein höherer Druckverlust führt auch zu einer schnelleren Aufstiegsgeschwindigkeit und mehr Kollisionen der Luftblasen und nimmt damit negativen Einfluss auf den Sauerstoffübergang in das Abwasser. Hier gilt es in der Herstellung der Belüfter einen Kompromiss aus Druckverlust, Blasengröße und Aufstiegsgeschwindigkeit zu finden. Für Membranbelüfter bedeutet dies, dass eine möglichst weiche Membran mit einem geringen Öffnungsdruck mit möglichst kleinen Schlitzten versehen ist.

In der Anwendung der Belüfter kommt hinzu, dass Membranbelüfter gewisse mechanische Anforderungen erfüllen müssen. Da die Membran über einem Trägerkörper angebracht sind, die Luft alleine durch die Membranöffnungen in das Abwasser entweichen kann und ein gewisser Druck benötigt wird, um die Membran zu öffnen, weitet sich die Membran zunächst bis zu dem Punkt, an dem der Druck unterhalb der Membran so groß ist, dass die Membran öffnen.

Dieses Weiten der Membran führt zu Zugkräften und Spannungen im Material. Gerade in der intermittierenden Anwendung führt ein Wechsel zwischen "entspannt" und "geweitet" zu einer Schwächung/Verschleiß der Membran. Das Weiten der Membran bewirkt zudem, dass die Luft bevorzugt an den Stellen austritt, an denen die Zugkräfte am größten sind. Hierdurch wird verhindert, dass alle vorhandenen Membranöffnungen zu 100% aktiv sind, wodurch die Leistung der Belüfter beeinträchtigt wird.

Um ein Weiten der Membran zu reduzieren werden heute so genannte Niederhalter oder Materialen verwendet, die sich weniger weiten. Niederhalter sind in die Membran eingebrachte Textilen oder andere starre Werkstoffe, die so mit dem Trägerkörper verbunden sind, dass sie einem Weiten entgegenwirken.

Membranmaterialien, die sich weniger weiten, sind starrere/unelastischere Materialien oder Materialien mit einem sehr geringen Druckverlust. starrere/unelastischere Materialien bewirken einen höheren Druckverlust. Weichere/elastischere Membranen mit einem geringen Öffnungsdruck wirken einem Weiten entgegen, weil die Energie des Luftvolumenstroms schneller durch die Membranöffnungen abgeleitet werden kann.

Bei weicherem/elastischerem Material führt der Druck der Wassersäule auf die Membran in der Nicht-Betriebsphase dazu, dass der Wasserdruck das Membranmaterial komprimiert. Diese Kompression führt in den Bereichen der Membranöffnungen dazu, dass diese nicht dicht verschließen und Abwasser eindringt.

Weichere/elastischere Werkstoffe weisen einen niedrigeren Weiterreißwiderstand auf, als härtere/unelastischere Werkstoffe. Bekanntermaßen bewirkt ein Weiten von Membranen und die hierdurch auftretenden Zugkräfte im Material, dass die Membranen im Bereich der Membranöffnung einreißen und zerstört werden können. Die Verwendung dieser Werkstoffe ist somit heute nicht möglich.

Da die Membran über einem Trägerkörper positioniert ist, ist diese größer ausgeführt als der Trägerkörper. Dies bewirkt, dass der Wasserdruck, der auf die Membran einwirkt, wenn keine Luft eingetragen wird, die Membran verformt. Hierbei wird das Membranmaterial zunächst an den Trägerkörper gepresst, wobei das Überschüssige Material zu einer Falte zusammengeführt wird. Diese Faltenbildung bewirkt Spannungen an der Membranoberfläche und reduziert die Haltbarkeit der Membran an diesen Stellen. Es kommt zu Rissen oder einer Versprödung.

Poröse Belüfter haben demgegenüber den Vorteil, dass keine Membran verbaut ist, die mechanischen Belastungen ausgesetzt ist. Schäden durch Risse oder ein unterschiedliches Öffnen der von Membranen tritt hier nicht auf. Allerdings dringt Abwasser immer in die Belüfter ein, was Verstopfungen verursacht.

Der Einsatz von Belüfter zur biologischen Abwasserreinigung mittels Mikroorganismen, ist hinlänglich bekannt und im Stand der Technik (EP 1 129 768 B1, DE 10 2010 015 059 A1, JP 2015-085227 A) weitreichend dokumentiert.

Um eine Beschädigung an der Membran zu verhindern, werden im Stand der Technik Membrane eingesetzt, die eine Shore-Härte von 65 - 70 aufweisen. Je größer die Shore-Härte der Membran, desto größer muss der Druck sein, mit dem die Membran belastet wird. Der erhöhte Druck führt jedoch zu vergrößerten Luftblasen, die an das Abwasser abgegeben werden.

Versuche eine weich-elastische Membran mittels einer Gewebeverstärkung, siehe DE 10 2009 041 992 A1, JP 2015-085227 A, widerstandsfähiger und verschließärmer auszugestalten, haben sich nicht als ausreichend vorteilhaft erwiesen.

Ein weiterer zu vermeidender Nachteil besteht darin, dass im zentralen Bereich, insbesondere bei tellerförmigen Belüftern, die Membran weiter gedehnt wird als in den Randbereichen. Dies führt dazu, dass die Perforationsschlitze weiter geöffnet und die Flüssigkeitssäule im Vergleich zu den Randbereichen weiter vermindert wird. Beide Effekte führen dazu, dass im zentralen Bereich der Belüfter mehr Luft an das Abwasser abgegeben wird, als in den Randbereichen. Es entsteht ein nicht gelichmäßiges Gasströmungsprofil über die Oberfläche der Membran.

Um ein verstärktes Aufwölben im zentralen Bereich eines Belüfters zu vermeiden und somit eine über die Oberfläche des Belüfters gleichmäßige Abgabe an Luftblasen zu gewährleisten, ist es aus der JP 2014-079729 A: bekannt, den zentralen Bereich dicker auszugestalten als die Randbereichen. Dieser Ansatz führt jedoch zu einem erhöhten Materialeinsatz und folglich zu höheren Produktionskosten. Des Weiteren vermag es nicht, die Problematik der verminderten Haltbarkeit aufgrund von mechanischer Belastung im Randbereich zu lösen.

**Aus** der FR 1 402 244 A ist ein perforiertes Leitungsrohr zur Belüftung einer Flüssigkeit bekannt. Das Rohr ist einstückig und besteht aus einem elastischen Material. Das Rohr weist in seiner Wand eine Mehrzahl paarweise gegenüberliegend angeordneter Schlitze auf, deren Schnittflächen zur Rohrinnenseite hin geneigt sind. Zwischen den Schlitzen wird eine Brücke gebildet, die aus einer elastischen Verbindung besteht. Bei Überdruck innerhalb des Rohres werden die Schlitze geöffnet und bei Überdruck außerhalb des Rohres geschlossen-

**Aus** der US 2012/0193838 A1 ist ein Belüftungskörper umfassend: ein Membranelement bekannt, das aus einem röhrenförmigen elastischen Körper mit einer Innenfläche gebildet ist, die mit einer Luftversorgungsquelle in Verbindung steht. Auf dem Membranelement sind eine Vielzahl von Diffusionsschlitzen ausgebildet, die dieses durchdringen, wobei die Diffusionsschlitze eine nicht geradlinige Form aufweisen. Jeder der Vielzahl von Diffusionsschlitzen weist einen geneigten Oberflächenabschnitt auf, wobei Schneidoberflächen des Diffusionsschlitzes in dem geneigten Oberflächenabschnitt in Bezug auf eine radiale Richtung des Membranelements geneigt sind

**Aus** der DE 10 2014 226 134 A1 ist ein Luftverteiler bekannt, bei dem in einem mehrschichtigen Aufbau eine abwasserseitige Funktionsschicht, eine Trägerschicht und eine Dichtschicht vorhanden sind. Die Trägerschicht weist eine höhere Härte als die Dichtschicht auf. Luftdurchtrittsöffnungen durchdringen alle drei Schichten und können zylindrisch oder konisch ausgebildet sein, wobei sich bei der konischen Ausbildung die Luftdurchtrittsöffnungen zur Dichtschicht verjüngen.

**Aus** der EP 2 757 075 A1 ist eine Klärbeckenbelüftung bekannt, die eine Trägerstruktur mit einer eine Vielzahl von Luftaustrittsöffnungen aufweisenden Membran umfasst. Die Membran ist mit einem Fixierungsmittel fluiddicht an die Trägerstruktur angeschlossen. Die Trägerstruktur weist auf ihrer membranseitigen Oberfläche eine Profilierung auf, welche Profilierung zumindest eine zwischen Erhebungen angeordnete Verteilung aufweist, wobei die Membran mit mindestens einem Befestigungsmittel an der Trägerstruktur gesichert ist. Die Membran liegt im Ruhezustand des Klärbeckens an der Profilierung auf, während sie im Betriebszustand von der Profilierung abgehoben ist.

Aus der DE 34 41 731 A1 ist ein Belüftungselement bekannt, das einen hohlen Grundkörper aufweist, der an ein Verteilungsrohr für Luft angeschlossen ist. In seiner Decke sind einzelne Auslassöffnungen vorhanden. Auf der Außenseite der Decke ist eine Membran angeordnet die entlang ihrer Ränder mit dem Grundkörper gasdicht verbunden ist. Die Membran weist außerhalb des Flächenbereiches der Auslassöffnungen des Grundkörpers eine größere Anzahl Durchtritten auf, vorzugsweise in Form feiner Schlitze.

Der vorliegenden Erfindung liegt die Aufgabe zugrunde, die genannten Probleme beim Einbringen eines Gases in eine Flüssigkeit zu beseitigen und eine Begasungseinrichtung bereitzustellen, deren Membran eine verbesserte Haltbarkeit im intermittierenden Betrieb der Begasungseinrichtung aufweist, einen gleichmäßigen Gasaustritt mit einer möglichst feinen Blasenbildung über die gesamte Oberfläche der Membran gewährleistet und kostengünstig zu produzieren ist.

Diese Aufgabe wird bei einer Begasungseinrichtung nach dem Oberbegriff des Anspruchs 1 durch die kennzeichnenden Merkmale dieses Anspruchs gelöst. Weiterbildungen und vorteilhafte Ausgestaltungen ergeben sich aus den abhängigen Ansprüchen.

Die erfindungsgemäße Begasungseinrichtung verlässt das bisher im Stand der Technik übliche Konzept einer homogenen, einteiligen Ausführung der Membran und besteht stattdessen aus einer Kombination aus einer Trägermembran mit einer Begasungsmembran. Dabei führen die unterschiedlichen Eigenschaften der Elastizität der Trägermembran und der Begasungsmembran im gemeinsamen Verbund zu einem Synergieeffekt, der durch einen geringen Öffnungsdruck den Austritt von Gasblasen mit geringer Blasengröße und geringer Austritts-und Aufstiegsgeschwindigkeit ermöglicht, ferner zu einer gleichmäßigen Verteilung des Austritts von Gasblasen auf der gesamten Oberfläche der Membran führt, eine zuverlässige Dichtung im Nicht-Betrieb gegen eindringende Flüssigkeit schafft und durch Verschleißarmut konstante Betriebseigenschaften über eine lange Betriebsdauer aufweist.

Erreicht werden diese Ergebnisse durch die größere Elastizität und Weichheit der Begasungsmembran gegenüber der Trägermembran, die vergleichsweise starre Eigenschaften besitzt. Gleichzeitig kommunizieren Durchtrittsöffnungen der Trägermembran mit Perforationsschlitzen der Begasungsmembran und ermöglichen so einen widerstandsarmen Gasübertritt in die Flüssigkeit bei geringem Öffnungsdruck während umgekehrt die Funktion als Rückschlagventil im Nicht-Betrieb eine hohe Dichtigkeit auch bei einem hohen hydrostatischen Gegendruck sicherstellt.

Die Begasungsmembran besteht aus einer Mehrzahl von Einsätzen, welche einzeln in den Durchtrittsöffnungen der Trägermembran angeordnet sind. Hierbei muss die auf die inselförmigen Einsätze der Begasungsmembran ausgeübte Kraft vollständig von der Grenzschicht zwischen der Begasungsmembran und den Durchtrittsöffnungen der Trägermembran aufgenommen werden. Dafür beschränkt sich der Materialeinsatz des gegenüber dem Werkstoff für die Trägermembran teureren Werkstoffs der Begasungsmembran allerdings auf den Bereich der Durchtrittsöffnungen der Trägermembran, wodurch sich für die Begasungseinrichtung Kostenvorteile ergeben.

Der Unterschied zwischen einer Durchtrittsöffnung und einem Perforationsschlitz besteht darin, dass die Durchtrittsöffnung stets als Öffnung vorhanden ist und die Perforationsschlitze so schmal sind, dass diese durch die aneinander liegenden Bereiche den Perforationsschlitz im abgeschalteten Zustand der Begasungseinrichtung verschließen.

Der durch die erfindungsgemäße Ausführung nötige Öffnungsdruck ist geringer als bei klassischen Membranen nach dem Stand der Technik. Durch den Verbund der Begasungsmembran mit der Trägermembran als Verbundwerkstoff kann die Membran nicht aufwölben und überdehnen und neigt daher im Nicht-Betrieb zu keiner Faltenbildung und somit zu keiner vorzeitigen Verspottung oder Ermüdung des Materials. Außerdem kommt es zu keiner Aufweitung einzelner Perforationsschlitze, so dass ein gleichmäßiger Druck an allen verfügbaren Perforationsschlitzen herrscht und diese aktiv an der Begasung teilnehmen. Dies führt zu einer hohen Effizienz der zur Begasung eingesetzten Energie des Luftvolumenstroms.

Durch die Möglichkeit, ein weiches Material mit einem, bei gleicher Schlitzgröße, vom Grunde her geringeren Öffnungsdruck der Membran im Vergleich zu einer Membran mit einem härteren Material zu verwenden, kann ein Schlitz in der starren Membran bei gleichem Druckverlust immer kleiner ausgebildet sein als bei einer Membran mit einem härteren Material ohne den Druckverlust ohne die Austrittsgeschwindigkeit der Luftblase aus der Membrane negativ zu beeinflussen.

Die Durchtrittsöffnungen der Trägermembran nehmen von der der Flüssigkeit zugewandten Außenseite her zu der der Gaszufuhr zugewandten Innenseite hin in ihrer Innenweite ab und können vorzugsweise konisch als Kegel oder Kegelstumpf oder Pyramide oder Pyramidenstumpf ausgebildet sein. Die Begasungsmembran ragt im Bereich ihrer Perforationsschlitze teilweise oder vollständig in die Durchtrittsöffnungen der Trägermembran hinein und weist eine entsprechende Negativkontur zu den Durchtrittsöffnungen der Trägermembran auf.

Die Integration der Perforationsschlitze im Inneren der Durchtrittsöffnungen führt zu einem kurzen und damit widerstandsarmen Strömungsweg des Gases durch die Membran hindurch. Die konische Form der Durchtrittsöffnungen und die Negativform der Begasungsmembran mit den Perforationsschlitzen verhindert eine unerwünschte übermäßige Verformung der Begasungsmembran bei Abschalten der Gaszufuhr und Belastung durch die dann von außen wirkende hydrostatische Kraft der Flüssigkeitssäule. Die eine Verformung verringernde Gegenkraft wird nämlich von den schrägen Seitenwänden der Durchtrittsöffnungen der Trägermembran aufgebracht. Gleichzeitig werden die Seitenwände der Perforationsschlitze verstärkt gegeneinander gedrückt und ermöglichen so eine zuverlässige Dichtwirkung als Rückschlagventil, wobei die Dichtwirkung sogar mit zunehmendem hydrostatischem Druck ebenfalls zunimmt.

Es kann vorteilhaft sein, wenn der Verbundwerkstoff ein Teilchenverbundwerkstoff oder ein Schichtverbundwerkstoff ist.

Bei der vorliegenden Erfindung ist unter einem Teilchenverbundwerkstoff ein Verbundwerkstoff gemeint, der aus einem ersten Material besteht, in welches wenigstens eine Durchtrittsöffnung eingebracht ist. In den Durchtrittsöffnungen des ersten Materials ist ein zweites Material angeordnet.

Ein Schichtverbundwerkstoff besteht aus wenigstens zwei Schichten, wobei die Schichten aus unterschiedlichen Materialien mit unterschiedlichen Eigenschaften bestehen können.

Dadurch ist es möglich, für die Abgabe des Gases an die Flüssigkeit einen weich-elastischen Kunststoff einzusetzen, diesen jedoch nur in geringen Mengen.

Es kann vorteilhaft sein, wenn die Trägermembran eine Shore-A-Härte von größer 60 aufweist.

Je nach Einsatzzweck, insbesondere je nach Größe der über der Membran anstehenden Flüssigkeitssäule, kann die Steifigkeit der Trägermembran angepasst werden.

Es kann vorteilhaft sein, wenn die Begasungsmembran eine Shore-A-Härte von kleiner 60 aufweist.

Je kleiner die Shore-Härte, desto elastischer das Material. Elastische Materialien weisen den Vorteil auf, dass der Druck um das Gas in die Flüssigkeit zu verbringen, sehr viel geringer sein kann, als wenn eine steifere Membran verwendet werden würde. Dabei lässt sich die Elastizität an die äußeren Bedingungen anpassen. Für Flüssigkeitssäulen, wie sie in Kläranlagen üblich sind, haben sich Materialien mit Shore-Härten in den jeweils für die Begasungsmembran und für die Trägermembran angegebenen Bereichen als vorteilhaft erwiesen.

Die Begasungsmembran kann vorzugsweise ein Ethylen-Propylen-DienKautschuk (EPDM) oder ein Nitrilkautschuk (NBR) oder ein Silikon oder ein Polyurethan (PU) sein.

Mit diesen Materialien lassen sich die gewünschte Shore-Härte im erforderlichen Bereich erzielen und die Qualitätsanforderungen hinsichtlich Verschleißarmut und hoher Lebensdauer erfüllen.

Es kann vorteilhaft sein, wenn die Perforationsschlitze strich- oder kreuz- oder sternförmig ausgebildet sind.

Die Art und Anzahl der Perforationsschlitze beeinflusst das Öffnungsverhalten der Perforationsschlitze und somit die Gasabgabe an die umgebende Flüssigkeit maßgeblich. Je mehr schlitze über einer Durchtrittsöffnung vorhanden sind, desto leichter lässt sich der Perforationsschlitz öffnen und desto mehr Gas kann entweichen.

Dabei wird unter einem strichförmigen Perforationsschlitz ein einfacher Schlitz in einer geraden Linie gemeint, der die Begasungsmembran auf der gesamten Dicke der Begasungsmembran durchläuft. Bei einer kreuzförmigen Anordnung sind wenigstens zwei sich schneidende Schlitze vorhanden, die einen beliebigen Winkel, bevorzugt einen Winkel von 90° zueinander, einnehmen, wohingegen ein sternförmiges Muster wenigstens drei Schlitze umfasst, die sich in einem Punkt schneiden.

Gemäß einer Weiterbildung können der Trägerkörper oder die Trägermembran auf der der Trägermembran bzw. dem Trägerkörper zugewandten Seite Abstandselemente in Form einer Trägermatrix aufweisen.

Diese Abstandselemente dienen dazu, unmittelbar nach Einschalten der Gaszufuhr gleichzeitig einen Gasaustritt aus allen Perforationsschlitze einzuleiten. Sofern nämlich die Trägermembran zuvor aufgrund der Flüssigkeitssäule an den Trägerkörper gepresst wurde, müsste zunächst Energie aufgewandt werden, um die Trägermembran vom Trägerkörper abzulösen. Dieser Vorgang würde aber Zeit in Anspruch nehmen und sich zunächst von einer Stelle aus ausbreiten, an der das Gas von Gaseinlassöffnungen in den Zwischenraum zwischen dem Trägerkörper und der Membran eintritt. In dem Fall würden zuerst nur die Perforationsschlitze aktiv werden, bei denen sich die Membran bereits vom Trägerkörper abgehoben hat. Durch die Trägermatrix wird die Membran daran gehindert, sich vollständig an den Trägerkörper anzulegen. Es verbleibt somit ein sich über die gesamte Unterfläche der Membran und Oberfläche des Trägerkörpers erstreckender Raum, über den Gas nach Einschalten der Gaszufuhr sofort zu allen Perforationsschlitze gelangen und austreten kann.

Es kann vorteilhaft sein, wenn die Membran im Bereich der Gaseinlassöffnungen des Trägerkörpers frei von Durchtrittsöffnungen und Perforationsschlitzen ist.

Dadurch wird ein direkter Gasaustritt in diesem Bereich verhindert und das Gas verteilt sich zunächst unter der gesamten Fläche der Membran, bevor es gleichmäßig über alle Perforationsschlitze an die Flüssigkeit abgegeben wird.

Weiterbildungen und vorteilhafte Ausgestaltungen der Erfindung können sich auch aus den nachfolgenden Beschreibungen von Ausführungsbeispielen ergeben, die in der Zeichnung dargestellt sind. In dieser zeigen:
Fig. 1 eine schematische Schnittansicht eines Teilbereichs einer Begasungseinrichtung nach der Erfindung ,
Fig. 2 als Einzelheit aus Fig. 1 eine schematische Schnittansicht einer Membran der Begasungseinrichtung im ursprünglichen unbenutzten Zustand
Fig. 3 als Einzelheit aus Fig. 1 eine schematische Schnittansicht einer Membran der Begasungseinrichtung im Betrieb bei eingeschalteter Gaszufuhr und
Fig. 4 als Einzelheit aus Fig. 1 eine schematische Schnittansicht einer Membran der Begasungseinrichtung im Betrieb bei ausgeschalteter Gaszufuhr.

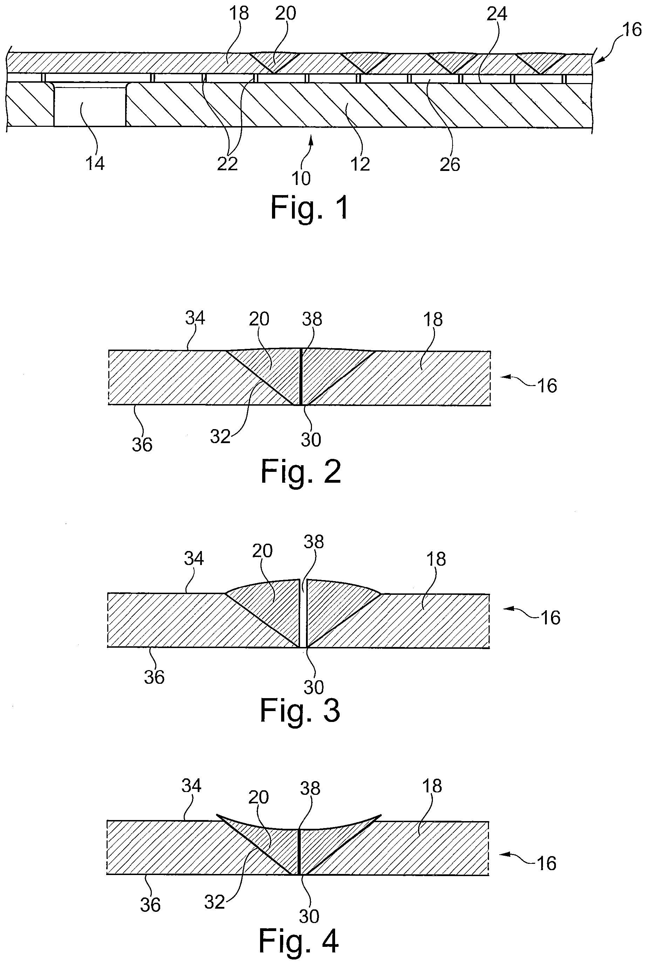

Werden in den Figuren 1 bis 4 gleiche Bezugsziffern verwendet, so bezeichnen diese gleiche Teile, so dass zwecks Vermeidung von Wiederholungen nicht bei jeder Figurenbeschreibung auf ein bereits beschriebenes Bauteil erneut eingegangen werden muss.

Fig. 1 zeigt eine schematische Schnittansicht eines Teilbereichs einer Begasungseinrichtung 10 nach der Erfindung. Auf einem Trägerkörper 12 mit einer Gaseinlassöffnung 14 ist eine Membran 16 montiert, die ihrerseits aus einer Trägermembran 18 und einer Begasungsmembran 20 besteht. Die Trägermembran 16 weist auf ihrer dem Trägerkörper 12 zugewandten Seite Abstandselemente 22 auf, die in Form einer Trägermatrix angeordnet sind. Diese Abstandselemente 22 schaffen einen bleibenden Zwischenraum 28 zwischen der Oberfläche 24 des Trägerkörpers 12 und der Unterfläche 26 der Trägermembran 18, wodurch sich das durch die Gaseinlassöffnung zugeführte Gas von Anfang an vollständig in dem Raum 28 zwischen dem Trägerkörper 12 und der Trägermembran 16 ausbreiten kann und sich nicht erst den Weg zu den Durchtrittsöffnungen und Perforationsschlitze durch Anheben der Membran bahnen muss. Die gezeigte Gaseinlassöffnung 14 befindet sich allerdings in einem Bereich der Membran 16, die frei von Durchtrittsöffnungen und Perforationsschlitzen ist. Dadurch wird verhindert, dass das zugeführte Gas nicht bevorzugt den kürzesten Austrittsweg sucht, sondern sich erst gleichmäßig zu den übrigen Durchtrittsöffnungen und Perforationsschlitze ausbreiten kann, ehe es durch diese in die Flüssigkeit übertritt.

Fig. 2 zeigt als Einzelheit aus Fig. 1 eine schematische Schnittansicht einer Membran der Begasungseinrichtung im ursprünglichen unbenutzten Zustand.

In der Trägermembran 18 sind Durchtrittsöffnungen 30 angeordnet, von denen in dieser und den folgenden Figuren nur jeweils eine dargestellt ist. Die Innenwände 32 der Durchtrittsöffnung 30 verlaufen von der der Flüssigkeit zugewandten Außenseite 34 aus zu der der Gasversorgungsseite zugewandten Innenseite 36 hin in einem schrägen, etwa V-förmlichen Verlauf. Die lichte Weite der Durchtrittsöffnung 30 verjüngt sich somit von der Außenseite 34 zur Innenseite 36. In räumlicher Hinsicht handelt es sich um die Begrenzung eines Kegels oder Kegelstumpfes.

Diese Durchtrittsöffnung 30 ist mit dem Material der Begasungsmembran 20 ausgefüllt. Die Begasungsmembran 20 ist also nicht durchgehend über die gesamte Außenfläche der Trägermembran 18 erstreckt, sondern beschränkt sich als einzelne Inseln lediglich auf die Durchtrittsöffnungen 30 der Trägermembran 18. Die Begasungsmembran 20 und die Trägermembran 18 bilden einen Verbundwerkstoff, d.h., dass die Grenzschichten innig miteinander verbunden sind und dies auch im bestimmungsgemäßen Betrieb bleiben und nur durch Zerstörung getrennt werden können. Die Begasungsmembran 20 und die Trägermembran 18 unterscheiden sich hinsichtlich Elastizität und Weichheit. Während die Begasungsmembran 20 hochelastisch und weich ist, verhält sich die Trägermembran 18 vergleichsweise unelastisch und hart, also als nahezu starrer Körper. Erreicht werden diese unterschiedlichen Eigenschaften durch unterschiedliche Werkstoffe oder unterschiedliche Zusätze in ähnlichen oder gleichen Grundwerkstoffen.

Die Begasungsmembran 20 weist einen zentralen Perforationsschlitz 38 auf, der sich von der Innenfläche 36, von der aus das Gas zugeführt wird, zur Außenfläche 34, an der die Flüssigkeit ansteht, erstreckt. Der Perforationsschlitz 38 kann im Detail strich- oder kreuz- oder sternförmig ausgebildet sein.

Fig. 3 zeigt als Einzelheit aus Fig. 1 eine schematische Schnittansicht einer Membran der Begasungseinrichtung im Betrieb bei eingeschalteter Gaszufuhr. In diesem Fall ist der auf die Innenwand 36 der Membran 16 und damit auch auf die Begasungsmembran 20 einwirkende Druck größer als der von außen auf die Außenwand 34 der Begasungsmembran 20 einwirkende hydrostatische Druck der Flüssigkeit. Aufgrund der Druckdifferenz expandiert die Begasungsmembran 20 etwas nach außen und dehnt sich gleichzeitig aufgrund ihrer Elastizität und Weichheit an den konischen Grenzflächen 32 zur Trägermembran 18. Dabei öffnet sich der Perforationsschlitz 38, so dass Gas hindurchströmen kann und Gasblasen austreten und in die Flüssigkeit übertreten können. Das Aufwölben und Dehnen der Begasungsmembran 20 erfolgt über eine sehr geringe Wegstrecke, so dass es zu keiner bleibenden Überdehnung und unerwünschten Faltenbildung nach Abschalten der Gaszufuhr im wieder entspannten Zustand kommen kann.

Dies wird auch dadurch erreicht, dass durch die kegelförmige oder kegelstumpfförmige Ausgestaltung nur eine geringe Angriffsfläche von der Innenseite 36 der Membran 16 her vorhanden ist. Die Trägermembran 18 verhält sich vergleichsweise wesentlich steifer und unterstützt somit die Verformung der Begasungsmembran 20 praktisch nicht. Weiterhin ermöglicht die Gestaltung und Eigenschaft hinsichtlich Elastizität und Weichheit der Begasungsmembran 20 eine sehr gute Dosierung der in die Flüssigkeit übertretenden Gasmenge in Abhängigkeit des Druckes. Dabei bleibt die Feinblasigkeit in weiten Grenzen erhalten.

Fig. 4 zeigt als Einzelheit aus Fig. 1 eine schematische Schnittansicht einer Membran der Begasungseinrichtung im Betrieb bei ausgeschalteter Gaszufuhr.

In diesem Fall ist der von der Außenseite 34 der Membran 16 anstehende hydrostatische Druck der Flüssigkeitssäule größer als der Druck auf die Innenseite 36 der Membran 16. Da aufgrund der geometrischen Ausgestaltung der Begasungsmembran 20 die nach außen zur Flüssigkeit weisende Fläche groß ist, kann der hydrostatische Druck der Flüssigkeit eine große Kraft auf die Begasungsmembran 20 ausüben, was bei der kegelförmigen Gestalt zu einer Verschiebung zur Innenseite 36 der Membran 16 und Aneinanderpressen der Wände der Perforationsschlitze 38 führt. Gleichzeitig dellt sich dabei die der Außenseite 34 zugewandte Fläche der Begasungsmembran 20 etwas ein. Aufgrund der konischen Gestalt ist die Kraft, mit der die Wände der Perforationsschlitze 38 aneinandergedrückt werden, direkt abhängig von dem hydrostatischen Druck, so dass auch die Dichtwirkung mit zunehmendem hydrostatischen Druck aufrechterhalten bleibt. In diesem Fall findet aber keine Dehnung, sondern eine Schrumpfung der Begasungsmembran 20 statt, also von deren neutralen Zustand gegenüber der Dehnung in die andere Richtung. Eine einseitige Belastung, die zu einer Versprödung und Ermüdung des Werkstoffes führen könnte, wird so vermieden.

### Bezugszeichenliste

- 10: Begasungseinrichtung
- 12: Trägerkörper
- 14: Gaseinlassöffnung
- 16: Membran
- 18: Trägermembran
- 20: Begasungsmembran
- 22: Abstandselemente
- 24: Oberfläche
- 26: Unterfläche
- 28: Zwischenraum
- 30: Durchtrittsöffnung
- 32: Innenwand der Durchtrittsöffnung
- 34: Außenseite
- 36: Innenseite
- 38: Perforationsschlitz

## Patentansprüche

1. Begasungseinrichtung (10) zum intermittierenden Einbringen von sauerstoffhaltigem Gas oder Luft in eine Flüssigkeit oder das Abwasser einer Kläranlage, umfassend wenigstens eine Membran (16) und einen die Membran tragenden Trägerkörper (12) mit Gaseinlassöffnungen (14), wobei die Membran (16) eine Trägermembran (18) und eine Begasungsmembran (20) umfasst, in der Trägermembran (18) Durchtrittsöffnungen (30) und in der Begasungsmembran (20) durchgehende Perforationsschlitze (38) angeordnet sind, sich die Perforationsschlitze (38) der Begasungsmembran (20) an die Durchtrittsöffnungen (30) der Trägermembran (18) anschließen oder in diese hineinragen oder innerhalb der Durchtrittsöffnungen (30) angeordnet sind und die Begasungsmembran (20) eine höhere Elastizität aufweist und weicher ist, als die Trägermembran (18), **dadurch gekennzeichnet, dass** die Begasungsmembran (20) aus einer Mehrzahl von Einsätzen besteht, welche einzeln in den Durchtrittsöffnungen (30) der Trägermembran (18) angeordnet sind, dass die Durchtrittsöffnungen (30) der Trägermembran (18) von der dem Abwasser zugewandten Außenseite (34) her zu der der Gaszufuhr zugewandten Innenseite (36) hin in ihrer Innenweite abnehmen und dass die Begasungsmembran (20) im Bereich ihrer Perforationsschlitze (38) teilweise oder vollständig in die Durchtrittsöffnungen (30) der Trägermembran (18) hineinragt und eine entsprechende Negativkontur zu den Durchtrittsöffnungen (30) der Trägermembran (18) aufweist, wobei die Durchtrittsöffnung (30) mit dem Material der Begasungsmembran (20) ausgefüllt ist, die Begasungsmembran (20) und die Trägermembran (18) einen Verbundwerkstoff bilden, wobei die Grenzschichten innig miteinander verbunden sind und dies auch im bestimmungsgemäßen Betrieb bleiben.

2. Begasungseinrichtung (10) nach Anspruch 1, **dadurch gekennzeichnet, dass** die Durchtrittsöffnungen (30) der Trägermembran (18) konisch als Kegel oder Kegelstumpf oder Pyramide oder Pyramidenstumpf ausgebildet sind.

3. Begasungseinrichtung (10) nach Anspruch 1 oder 2, **dadurch gekennzeichnet, dass** der Verbundwerkstoff ein Teilchenverbundwerkstoff oder ein Schichtverbundwerkstoff ist.

4. Begasungseinrichtung (10) nach einem der Ansprüche 1 bis 3, **dadurch gekennzeichnet, dass** die Trägermembran (18) eine Shore-A-Härte von größer 60 aufweist.

5. Begasungseinrichtung (10) nach einem der Ansprüche 1 bis 4, **dadurch gekennzeichnet, dass** die Begasungsmembran (20) eine Shore-A-Härte von kleiner 60 aufweist.

6. Begasungseinrichtung (10) nach einem der Ansprüche 1 bis 5, **dadurch gekennzeichnet, dass** die Begasungsmembran (20) ein Ethylen-Propylen-DienKautschuk (EPDM), Nitrilkautschuk (NBR), ein Silikon, ein Polyurethan (PU) ist.

7. Begasungseinrichtung (10) nach einem der Ansprüche 1 bis 6, **dadurch gekennzeichnet, dass** die Perforationsschlitze (38) strich- oder kreuz- oder sternförmig ausgebildet sind.

8. Begasungseinrichtung (10) nach einem der Ansprüche 1 bis 7, **dadurch gekennzeichnet, dass** der Trägerkörper (12) oder die Trägermembran (18) auf der der Trägermembran (18) bzw. dem Trägerkörper (12) zugewandten Seite Abstandselemente (22) in Form einer Trägermatrix aufweist.

9. Begasungseinrichtung (10) nach einem der Ansprüche 1 bis 8, **dadurch gekennzeichnet, dass** die Membran (16) im Bereich der Gaseinlassöffnungen (14) des Trägerkörpers (12) frei von Durchtrittsöffnungen (30) und Perforationsschlitzen (38) ist.

## Claims

1. Gassing device (10) for intermittently introducing oxygen-containing gas or air into a liquid or the waste water of a waste water treatment plant, comprising at least one diaphragm (16) and a support body (12) which supports the diaphragm and has gas inlet openings (14), wherein the diaphragm (16) comprises a support diaphragm (18) and a gassing diaphragm (20), passage openings (30) being disposed in the support diaphragm (18) and piercing perforation slots (38) being disposed in the gassing diaphragm (20), the perforation slots (38) of the gassing diaphragm (20) adjoining the passage openings (30) of the support diaphragm (18) or protruding into said passage openings (30) or being disposed within the passage openings (30), and the gassing diaphragm (20) having a greater elasticity and being softer than the support diaphragm (18), **characterized in that** the gassing diaphragm (20) is composed of a plurality of inserts which are individually disposed in the passage openings (30) of the support diaphragm (18), **in that** the passage openings (30) of the support diaphragm (18) in terms of the internal width thereof decrease from the external side (34) facing the waste water towards the internal side (36) facing the gas supply, and **in that** the gassing diaphragm (20) in the region of the perforation slots (38) thereof protrudes partially or completely into the passage openings (30) of the support diaphragm (18) and has a negative contour corresponding to the passage openings (30) of the support diaphragm (18), wherein the passage opening (30) is filled with the material of the gassing diaphragm (20), the gassing diaphragm (20) and the support diaphragm (18) forming a composite material, wherein the barrier layers are inherently connected to one another and also remain in this state in the intended operation.

2. Gassing device (10) according to Claim 1, **characterized in that** the passage openings (30) of the support diaphragm (18) are configured so as to be conical, as a cone or truncated cone, or a pyramid or a frustum.

3. Gassing device (10) according to Claim 1 or 2, **characterized in that** the composite material is a particle composite material or a laminate composite material.

4. Gassing device (10) according to one of Claims 1 to 3, **characterized in that** the support diaphragm (18) has a Shore A hardness of more than 60.

5. Gassing device (10) according to one of Claims 1 to 4, **characterized in that** the gassing diaphragm (20) has a Shore A hardness of less than 60.

6. Gassing device (10) according to one of Claims 1 to 5, **characterized in that** the gassing diaphragm (20) is an ethylene propylene diene monomer rubber (EPDM), a nitrile butadiene rubber (NBR), a silicone, a polyurethane (PU).

7. Gassing device (10) according to one of Claims 1 to 6, **characterized in that** the perforation slots (38) are configured in the shape of lines, crosses or stars.

8. Gassing device (10) according to one of Claims 1 to 7, **characterized in that** the support body (12) or the support diaphragm (18), on that side that faces the support diaphragm (18) or the support body (12), respectively, has spacer elements (22) in the form of a support matrix.

9. Gassing device (10) according to one of Claims 1 to 8, **characterized in that** the diaphragm (16) in the region of the gas inlet openings (14) of the support body (12) is free of passage openings (30) and perforation slots (38).

## Revendications

1. Dispositif de gazage (10) destiné à introduire de façon intermittente un gaz ou de l'air contenant de l'oxygène dans un liquide ou les eaux usées d'une station d'épuration, ledit dispositif de gazage comprenant au moins une membrane (16) et un corps de support (12) portant la membrane et pourvu d'ouvertures d'entrée de gaz (14), la membrane (16) comprenant une membrane de support (18) et une membrane de gazage (20), des ouvertures de passage (30) étant ménagées dans la membrane de support (18) et des fentes de perforation traversantes (38) étant ménagées dans la membrane de gazage (20), les fentes de perforation (38) de la membrane de gazage (20) se raccordant aux ouvertures de passage (30) de la membrane de support (18) ou faisant saillie dans celles-ci ou étant ménagées à l'intérieur des ouvertures de passage (30) et la membrane de gazage (20) ayant une élasticité plus élevée et étant plus souple que la membrane de support (18), **caractérisé en ce que** la membrane de gazage (20) comprend une pluralité d'inserts qui sont disposés individuellement dans les ouvertures de passage (30) de la membrane de support (18), **en ce que** les ouvertures de passage (30) de la membrane de support (18) diminuent depuis le côté extérieur (34), dirigé vers les eaux usées, vers le côté intérieur (36) dirigé vers l'alimentation en gaz et **en ce que**, dans la zone de ses fentes de perforation (38), la membrane de gazage (20) fait saillie partiellement ou complètement dans les ouvertures de passage (30) de la membrane de support (18) et présente un contour négatif correspondant aux ouvertures de passage (30) de la membrane de support (18), l'ouverture de passage (30) étant remplie de la matière de la membrane de gazage (20), la membrane de gazage (20) et la membrane de support (18) formant une matière composite, les couches limites étant intimement reliées les unes aux autres et le restant pendant le fonctionnement normal.

2. Dispositif de gazage (10) selon la revendication 1, **caractérisé en ce que** les ouvertures de passage (30) de la membrane de support (18) ont une forme conique telle qu'un cône ou un cône tronqué ou une pyramide ou une pyramide tronquée.

3. Dispositif de gazage (10) selon la revendication 1 ou 2, **caractérisé en ce que** la matière composite est une matière composite particulaire ou une matière composite stratifiée.

4. Dispositif de gazage (10) selon l'une des revendications 1 à 3, **caractérisé en ce que** la membrane de support (18) a une dureté Shore A supérieure à 60.

5. Dispositif de gazage (10) selon l'une des revendications 1 à 4, **caractérisé en ce que** la membrane de gazage (20) a une dureté Shore A inférieure à 60.

6. Dispositif de gazage (10) selon l'une des revendications 1 à 5, **caractérisé en ce que** la membrane de gazage (20) est un caoutchouc éthylène-propylène-diène (EPDM), un caoutchouc nitrile (NBR), un silicone, un polyuréthane (PU).

7. Dispositif de gazage (10) selon l'une des revendications 1 à 6, **caractérisé en ce que** les fentes de perforation (38) sont conçues en forme de ligne, de croix ou d'étoile.

8. Dispositif de gazage (10) selon l'une des revendications 1 à 7, **caractérisé en ce que** le corps de support (12) ou la membrane de support (18) comporte, du côté dirigé vers la membrane de support (18) ou le corps de support (12), des éléments d'espacement (22) en forme de matrice de support.

9. Dispositif de gazage (10) selon l'une des revendications 1 à 8, **caractérisé en ce que**, au niveau des ouvertures d'entrée de gaz (14) du corps de support (12), la membrane (16) est dépourvue d'ouvertures de passage (30) et de fentes de perforation (38).
